# EUROPÄISCHE PATENTSCHRIFT

(11) **EP 2 815 627 B1**
(45) Veröffentlichungstag und Bekanntmachung des Hinweises auf die Patenterteilung: **27.04.2016**
(21) Anmeldenummer: 13706458.0
(22) Anmeldetag: 15.02.2013
(51) Int. Cl.: H05B 1/02, H05B 3/26, B60H 1/22, G05D 23/24

(54) **FAHRZEUGHEIZUNG UND VERFAHREN ZUR ÜBERWACHUNG EINER FAHRZEUGHEIZUNG**
VEHICLE HEATING AND METHOD FOR CONTROLLING A VEHICLE HEATING
CHAUFFAGE DE VÉHICULE ET PROCÉDÉ DE CONTRÔLE D'UN CHAUFFAGE DE VÉHICULE

(30) Priorität: 16.02.2012 DE 102012202379
(43) Veröffentlichungstag der Anmeldung: 24.12.2014
(73) Patentinhaber: Webasto SE, 82131 Stockdorf (DE)
(72) Erfinder: BYTZEK, Dietmar, 76726 Germersheim (DE); KABELITZ, Thorsten, 81673 München (DE); GÖTTL, Karl, 83026 Rosenheim (DE); ECKERT, Daniel, 82131 Stockdorf (DE); WEGENER, Fritz, 82205 Gilching (DE); RECHBERGER, Hans, 82065 Baierbrunn (DE); REINHOLZ, Uwe, 14532 Stahnsdorf (DE)
(74) Vertreter: Schumacher & Willsau
(86) Internationale Anmeldenummer: PCT/EP2013/053100
(87) Internationale Veröffentlichungsnummer: WO 2013/121010

(56) Entgegenhaltungen:
- EP-A2- 1 349 428
- WO-A1-2008/150171
- WO-A1-2010/008279
- DE-U1-202011 102 425

## Beschreibung

Die Erfindung betrifft eine Fahrzeugheizung mit einem Grundkörper, der eine nicht-eigensichere Heizleiterschicht trägt, wobei der Heizleiterschicht eine Temperaturüberwachungseinrichtung zugeordnet ist.

Weiterhin betrifft die Erfindung ein Verfahren zur Überwachung einer Fahrzeugheizung.

Bei dem Grundkörper kann es sich in beiden Fällen beispielsweise um einen Wärmetauscher handeln, insbesondere um einen Metall/Luft- und/oder einen Metall/Flüssigkeit-Wärmetauscher.

Im Gegensatz zu eigensicheren Heizleiterschichten, beispielsweise PTC-Heizleiterschichten, die einen zu starken Temperaturanstieg durch eine Begrenzung des Stromflusses selbstständig verhindern können, sind hier mit nicht-eigensicheren Heizleiterschichten alle Arten von Heizleiterschichten gemeint, die genau diese Fähigkeit zur Vermeidung von unsicheren Zuständen im Fehlerfall nicht aufweisen.

Die nicht-eigensichere Heizleiterschicht kann, ohne darauf beschränkt zu sein, beispielsweise dazu vorgesehen sein, mit vergleichsweise hohen Spannungen beaufschlagt zu werden (beispielsweise 250 Volt Gleichspannung), wobei zu hohe Spannungen beispielsweise durch eine Pulsweitenmodulation heruntergetaktet werden können, wenn dies vorteilhaft erscheint. Solche im Vergleich zu konventionellen Bordnetzen mit 12 oder 24 Volt relativ hohen Spannungen stehen beispielsweise bei Elektro- oder Hybridfahrzeugen häufig ohnehin zur Verfügung. Beispielsweise in solchen Umgebungen lassen sich durchaus elektrische Fahrzeugheizungen mit einer Leistung im Bereich von drei bis acht Kilowatt betreiben, wobei der Anwendungsbereich der Erfindung jedoch keinesfalls auf diesen Leistungsbereich oder diese Fahrzeugtypen beschränkt ist.

Eine Fahrzeugheizung mit einer Heizleiterschicht in Form eines nicht-eigensicheren Heizelementes ist beispielsweise aus der Patentschrift EP 1 361 089 B1 bekannt. Gemäß dieser Druckschrift sind zur Temperaturüberwachung drei alternative Sensoren zur oberflächenspezifischen Erfassung einer das Heizelement repräsentierenden Wärmestrahlung vorgesehen, wobei das Heizelement als mäanderförmige Wellrippe ausgeführt ist. Einer dieser Sensoren ist als berührungslos arbeitender Infrarotsensor ausgebildet. Ein anderer, das Heizelement berührender Sensor ist in Form einer in das Heizelement integrierten elektrischen Widerstandsleitung vorgesehen. Der dritte dort vorgeschlagene Sensor ist ebenfalls im Bereich des Heizelementes angeordnet beziehungsweise in dieses integriert und arbeitet auf der Grundlage eines temperatursensitiven Lichtwellenleiters. Die drei Sensoren liefern ein entsprechendes Messsignal an eine Steuereinheit, die im Fehlerfall ein Steuersignal zur sicheren Abschaltung oder zur Leistungsreduzierung des Heizelements generiert. Sollte bei dieser Fahrzeugheizung ein dauerhafter Defekt auftreten, so ist davon auszugehen, dass dieser dauerhafte Defekt auch beim nächsten Betriebszyklus zu einer Überhitzung und damit (bestenfalls) zu einer erneuten Abschaltung oder einer erneuten Leistungsreduzierung führen wird.

Ferner, ist eine Fahrzeugheizung gemäß dem Oberbegriff des Anspruchs 1 aus EP 1 349 428 A2 bekannt.

Der Erfindung liegt die Aufgabe zugrunde, die gattungsgemäßen Fahrzeugheizungen und die gattungsgemäßen Verfahren zur Überwachung einer Fahrzeugheizung so weiterzubilden, dass die Sicherheit erhöht wird.

Diese Aufgabe wird durch die Merkmale der unabhängigen Ansprüche gelöst. Vorteilhafte Ausgestaltungen und Weiterbildungen der Erfindung ergeben sich aus den abhängigen Ansprüchen.

Vorgeschlagen wird zunächst eine Fahrzeugheizung mit einem Grundkörper, der eine nicht-eigensichere Heizleiterschicht trägt, wobei der Heizleiterschicht eine Temperaturüberwachungseinrichtung zugeordnet ist. Die Temperaturüberwachungseinrichtung ist dabei dazu ausgelegt, zumindest die drei folgenden Zustände zu unterscheiden und als Signal zu melden: Normalbetrieb, reversible Funktionsstörung und irreversible Funktionsstörung. Von einem Normalbetrieb der Fahrzeugheizung kann beispielsweise bei einer Temperatur bis zu 150 °C ausgegangen werden. Bei einer reversiblen Funktionsstörung, die im Falle eines Wasser- oder Flüssigkeitsheizgerätes beispielsweise durch fehlende oder stehende Flüssigkeit verursacht werden kann, steigt die Temperatur über den beispielhaft genannten Wert von 150 °C an, so dass beispielsweise beim Erreichen einer Temperatur von 180 °C eine temporäre Abschaltung der Heizleiterschicht oder zumindest eine Leistungsreduzierung erfolgen kann. Eine irreversible Funktionsstörung kann beispielsweise vorliegen, wenn es in sehr seltenen Fällen zu einem Glimmpunkt oder einer Lichtbogenzündung gekommen ist. Solche seltenen Ereignisse führen in der Regel zwar nur zu lokalen, dafür aber extrem starken Überhitzungen, bei denen beispielsweise Temperaturen im Bereich von 1000 °C erreicht werden können. Durch die Unterscheidung der drei genannten Zustände ist es beispielsweise möglich, den zuletzt gemeldeten Zustand vor einer erneuten Inbetriebnahme, also einem neuen Betriebszyklus der Fahrzeugheizung abzufragen und im Falle einer irreversiblen Funktionsstörung eine erneute Inbetriebnahme zu verhindern, so dass die Fahrzeugheizung in einem solchen Fall dauerhaft abgeschaltet bleibt, solange kein Austausch oder keine Reparatur erfolgt ist. Die Sicherheit wird dadurch maßgeblich erhöht, weil insbesondere irreversible Fehler bei einem erneuten Einschalten des Heizgerätes zu einer erneuten sehr starken zumindest lokalen Überhitzung führen können.

Bei der Fahrzeugheizung kann vorgesehen sein, dass die Temperaturüberwachungseinrichtung zur Detektion von reversiblen Funktionsstörungen ein lokale Temperaturen erfassendes Sensorelement umfasst. Bei diesem Sensorelement kann es sich beispielsweise um ein herkömmliches PTC- oder NTC-Sensorelement handeln. Solche Sensorelemente sind in der Lage, die lokalen Temperaturen sehr genau zu erfassen, teilweise bis auf wenige °C genau. Sie eignen sich daher beispielsweise besonders gut, den oben beispielhaft genannten Temperaturanstieg von 150 °C auf 180 °C zu detektieren.

Weiterhin ist es möglich, dass die Temperaturüberwachungseinrichtung zur Detektion von irreversiblen Funktionsstörungen eine der Heizleiterschicht zumindest abschnittsweise zugeordnete Sensorschicht umfasst. Diese Sensorschicht ist dann vorzugsweise zumindest in der Lage, lokale und sehr starke Überhitzungen der Heizleiterschicht sicher und schnell zu detektieren, wie sie beispielsweise im Falle der erwähnten Glimmpunkte oder Lichtbögen auftreten. Die Sensorschicht ist dabei vorzugsweise über oder unter der Heizleiterschicht angeordnet. Beispielsweise kann die Sensorschicht die Heizleiterschicht mehr oder weniger vollständig abdecken (Anschlussbereiche und dergleichen können gegebenenfalls ausgespart werden). Da es sich bei einer Sensorschicht immer im weitesten Sinne um eine zumindest abschnittsweise flächige Schicht handelt, kommt beispielsweise auch eine aus einem oder mehreren (ggf. sehr schmalen) Streifen bestehende Sensorschicht in Betracht. Die Sensorschicht kann dabei einer beispielsweise mäanderförmig angeordneten Heizleiterschicht vom Verlauf her folgen, wobei sie die Heizleiterschicht aber vorzugsweise vollständig überdeckt (Anschlussbereiche können wie erwähnt gegebenenfalls ausgespart werden), oder die Sensorschicht kann größere Bereiche des Grundkörpers abdecken. Beispielsweise kann die Sensorschicht als in der Draufsicht rechteckige Sensorschicht über eine mäanderförmige Heizleiterschicht gelegt werden. Dabei kommen sowohl Lösungen in Betracht, bei denen die Sensorschicht direkt über der Heizleiterschicht angeordnet ist, so dass die Sensorschicht die Heizleiterschicht also zumindest abschnittsweise berührt, als auch Lösungen, bei denen zumindest eine Zwischenschicht vorgesehen ist. Als besonders wirksam hat es sich erwiesen, wenn die Sensorschicht so konditioniert ist, dass sie ihren Widerstand oder ihre Impedanz bereits im Falle einer lokalen Überhitzung stark ändert. Mit Hilfe einer solchen flächigen Sensorschicht ist es beispielsweise möglich eine lokale Überhitzung sicher zu detektieren, bevor das oben erwähnte Sensorelement an seinem Montageort eine lokale Temperaturerhöhung detektieren kann.

Zumindest in einigen Fällen wird es als vorteilhaft erachtet, dass die Sensorschicht mit Hilfe eines thermischen Spritzverfahrens ausgebildet wurde. Als Spritzverfahren kommen insbesondere thermische Spritzverfahren in Frage. Durch den Einsatz von thermischen Spritzverfahren können Sensorschichten hergestellt werden, ohne dass der Grundkörper den für Einbrennprozesse üblichen Temperaturen ausgesetzt wird. Ein derartiges Aufspritzen von Sensorschichten lässt sich vergleichbar günstig wie Einbrennverfahren durchführen, es schränkt jedoch die Anforderungen an die Temperaturverträglichkeit des verwendeten Grundkörpers (beziehungsweise an die von dem Grundkörper bereits getragenen Materialien) deutlich weniger ein. Daher kommen durch den Einsatz eines Aufspritzverfahrens für den Grundkörper auch Materialien in Frage, die bei für Einbrennprozesse üblichen Temperaturen schmelzen oder in ihrer Materialeigenschaft hinsichtlich des vorgesehenen Einsatzzweckes irgendwie anders negativ verändert würden. Beispielsweise kann der Grundkörper durch die Verwendung eines geeigneten Aufspritzverfahrens ganz oder teilweise aus Aluminium bestehen. Selbstverständlich kommt für den Grundkörper auch eine Vielzahl anderer Materialien in Frage, wobei es sich in vielen Fällen um Materialien mit guten Wärmeleiteigenschaften handeln wird. Lediglich beispielhaft seien in diesem Zusammenhang Aluminiumlegierungen, Gläser und Keramiken genannt. Als Beispiele für in Frage kommende thermische Spritzverfahren seien Plasmaspritzverfahren, Kaltgasspritzverfahren oder Flammspritzverfahren genannt. In einigen Fällen kann es vorteilhaft sein, auch andere Bestandteile der Fahrzeugheizung, beispielsweise die Heizleiterschicht, durch ein thermisches Spritzverfahren auszubilden. Als besonders gut geeignete thermische Spritzverfahren werden derzeit Kaltgasplasmaspritzverfahren und Suspensionsflammspritzverfahren betrachtet. Beim Kaltgasspritzen wird ein Gas, beispielsweise Stickstoff, auf hohe Geschwindigkeiten beschleunigt, wobei mit dem Gas beförderte Partikel mit hoher Geschwindigkeit (beispielsweise mehrfacher Schallgeschwindigkeit) auf den Grundkörper oder ein von diesem getragenes Substrat auftreffen und durch die hohe kinetische Energie eine dichte, fest haftende Schicht bilden. Beim Suspensionsflammspritzen wird zunächst eine Suspension mit den aufzuspritzenden Partikeln hergestellt, um diese Suspension dann in eine Flamme einzudüsen. Dabei verdampft die Flüssigkeit zumindest teilweise, vorzugsweise aber ganz, und es treffen (idealerweise) nur die jeweiligen Partikel auf die Zieloberfläche auf, wodurch sich dichte Schichten herstellen lassen. Jedenfalls ist den in Frage kommenden Verfahren zum Aufspritzen der Sensorschicht gemeinsam, dass der Grundkörper dabei nicht den für Einbrennverfahren üblichen hohen Temperaturen ausgesetzt werden muss. In diesem Zusammenhang kann beispielsweise vorgesehen sein, dass der Grundkörper nur Temperaturen von weniger als 800 °C, weniger als 650 °C und sogar nur weniger als 500 °C ausgesetzt wird. Es ist nachvollziehbar, dass die für den Grundkörper (und/oder irgendwelche von diesem bereits getragenen Komponenten) verwendbare Anzahl von Materialien steigt, je niedriger die Temperaturen gehalten werden können. Dabei sollte klar sein, dass die Formulierung "Temperaturen ausgesetzt wird" nicht zwingend bedeuten soll, dass der gesamte Grundkörper diese Temperatur dadurch annehmen soll oder muss. Vielmehr kommt es ausschließlich darauf an, dass der Grundkörper auch nicht abschnittsweise Temperaturen ausgesetzt wird, durch die er Schaden nehmen könnte. Je nach Beschaffenheit des Grundkörpers (Größe, Wärmeleitfähigkeit, usw.) kann es daher beispielsweise in einigen Fällen durchaus möglich sein, dass der Grundkörper in den dem Aufspritzvorgang nicht direkt ausgesetzten Bereichen bereits Komponenten (beispielsweise elektrische oder andere Bauteile) trägt, die nur sehr viel niedrigeren Temperaturen als 500 °C widerstehen können, beispielsweise nur 100 °C oder noch weniger. Es kann vorgesehen sein, dass die Sensorschicht mit Hilfe eines Pulvers hergestellt wird, wobei Pulverpartikel des Pulvers in agglomerierter Form vorliegen oder in agglomerierte Form gebracht werden und wobei die nicht-agglomerierten Pulverpartikel eine mittlere Korngröße d50 von weniger als 20 µm, vorzugsweise weniger als 10 µm aufweisen. Bezüglich der hier gemeinten, üblichen Definition der mittleren Korngröße d50 wird auf die einschlägige ISO 9276-2 verwiesen, sofern diesbezüglich Erläuterungsbedarf bestehen sollte. Beispielsweise Bariumtitanat-Pulver, das in einigen Fällen zur Schaffung der Sensorschicht in Frage kommen kann, hat typischerweise eine Kristallgröße von weniger als 10 µm (beispielsweise zwischen 2 µm und 8 µm oder zwischen 4 µm und 5 µm). Diese Partikelgröße kann für manche thermische Spritzverfahren (wie beispielsweise Plasmaspritzverfahren) zu klein sein, da sie zu Verstopfungen von Öffnungen des bei diesen Verfahren eingesetzten Spritzbrenners (oder irgendeines anderen Bestandteils der zum Aufspritzen verwendeten Vorrichtung) führen kann. Liegen jedoch mehrere Pulverpartikel in agglomerierter Form vor, zum Beispiel eingebettet in ein Hüllmaterial, kann ein Verstopfen der Öffnungen des Spritzbrenners vermieden werden. In den Agglomeraten können jeweils mehrere Pulverpartikel mit dem Hüllmaterial verbunden sein, das beispielsweise einen Kunststoff wie Polyvinylalkohol als Bestandteil haben kann. Weil die Agglomerate zumindest in der überwiegenden Mehrzahl größer als einzelne Pulverpartikel sind, kann ein Verstopfen des Spritzbrenners (oder irgendeines anderen Bestandteils der zum Aufspritzen verwendeten Vorrichtung) so zumindest in vielen Fällen vermieden werden. Selbstverständlich ist die Herstellung und Verwendung von Agglomeraten nicht auf Bariumtitanat-Pulver beschränkt. Vielmehr kann diese Technik für jedes im Rahmen der Erfindung in Frage kommende Pulver mit zu kleinen Pulverpartikeln verwendet werden. Damit die aufgespritzte Sensorschicht insgesamt die gewünschten elektrischen (oder optischen oder sonstigen) Eigenschaften aufweist, kann es sinnvoll sein, das zur Bildung der Agglomerate verwendete Hüllmaterial geeignet zu konditionieren. Soll beispielsweise insgesamt eine bestimmte spezifische elektrische Leitfähigkeit erzielt werden, sollte das Hüllmaterial vorzugsweise eine spezifische elektrische Leitfähigkeit haben, die in etwa mindestens so groß ist, wie die spezifische elektrische Leitfähigkeit der Pulverpartikel (bei einer Normalbetriebstemperatur der Fahrzeugheizung), sofern die Agglomerate beim Aufspritzen nicht zerstört werden oder das Hüllmaterial zumindest teilweise Bestandteil der aufgespritzten Sensorschicht bleibt. Man kann ein Zerstören der Agglomerate beziehungsweise ein zumindest teilweises Entfernen des Hüllmaterials aber auch gezielt unterstützen, so dass die Eigenschaften der Sensorschicht (zumindest weitgehend) durch die Eigenschaft der Pulverpartikel bestimmt werden. Hierzu können geeignete thermische, chemische und/oder physikalische Prozesse oder Nachbehandlungsschritte durchgeführt werden, sobald die Agglomerate die zur Verstopfung neigenden Abschnitte passiert haben. Falls mehrere Pulverkörner erst in die agglomerierte Form gebracht werden müssen, kann hierzu beispielsweise folgendermaßen vorgegangen werden: In einem ersten Schritt kann das entsprechende Material in seiner ursprünglichen Beschaffenheit bereitgestellt werden. In einem zweiten Schritt erfolgt dann eine Umwandlung in ein Vollmaterial, insbesondere mittels Sintern. Anschließend wird das Vollmaterial mittels Zerkleinern des Vollmaterials pulverisiert. Daraufhin können die Pulverpartikel durch die Anwendung eines Bindersystems sowie eine nachfolgende Trocknung und ein Ausbrennen des Binders agglomeriert werden. Es ist ebenfalls möglich, die Pulverpartikel mit Hilfe eines Granulierverfahrens zu pulverisieren. Soll beispielsweise ein granuliertes Perowskitpulver mit einer vorbestimmten mittleren Korngröße d50 zum Einsatz kommen, so kann wie folgt vorgegangen werden: In einer ersten Verfahrensstufe erfolgt ein Einwiegen und Mischen, ein Lösen der Salze in Säure, ein Ausfällen mit Lauge, ein Filtrieren sowie ein Waschen und Trocknen. In einer zweiten Verfahrensstufe kann anschließend eine Wärmebehandlung zur Phasenreaktion und/oder Umwandlung durchgeführt werden. In einer dritten Verfahrensstufe kann dann ein Nassmahlen bis zur gewünschten Feinheit erfolgen, wobei in einer vierten Verfahrensstufe ein Fraktionieren durch Sichten oder Sieben, eine Kontrolle des fertigen Pulvermaterials und/oder eine Aufbereitung von Restmengen erfolgen kann. Insbesondere in Fällen, in denen der Grundkörper und von diesem eventuell schon getragene Komponenten eine ausreichende Wärmefestigkeit aufweisen, können alternativ natürlich auch die gängigen Einbrennverfahren angewendet werden, um die Sensorschicht (oder andere Schichten) auszubilden.

Es kann vorgesehen sein, dass die Sensorschicht zumindest bereichsweise eine Widerstands- beziehungsweise Impedanzcharakteristik mit einem positiven Temperaturkoeffizienten aufweist. Diese Herangehensweise ist insbesondere dann sinnvoll, wenn die Sensorschicht eine längliche Ausdehnung mit zwei Endabschnitten hat, zwischen denen ein Messsignal abgegriffen wird, um die Sensorschicht hinsichtlich in ihrer Längsrichtung auftretender (oder erzwungener) Ströme zu überwachen. Die Funktionsweise kann dann ähnlich wie bei der Verwendung eines PTC-Widerstandsleiters sein, weil aufgrund des Reihenschaltungscharakters einer solchen länglichen Ausdehnung bereits eine ausreichende Erwärmung eines vergleichsweise kurzen Längenabschnitts ausreicht, um den Gesamtwiderstand (beziehungsweise die Gesamtimpedanz) so weit zu erhöhen, dass eine lokale Temperaturschwellenwertüberschreitung sicher detektiert werden kann. Entlang größerer Längenabschnitte oder sogar über die gesamte Länge auftretende Temperaturschwellenwertüberschreitungen lassen sich so natürlich erst recht sicher feststellen. Ein Beispiel zur Erzielung einer Widerstandscharakteristik mit einem positiven Temperaturkoeffizienten ist die Verwendung des vorstehend schon erwähnten Bariumtitanat-Pulvers, wobei das relativ kostengünstige Bariumtitanat vorzugsweise mit Blei dotiert ist oder wird.

Es ist aber auch möglich, dass die Sensorschicht zumindest bereichsweise eine Widerstands- beziehungsweise Impedanzcharakteristik mit einem negativen Temperaturkoeffizienten aufweist. Das Vorsehen eines negativen Temperaturkoeffizienten kommt insbesondere dann in Betracht, wenn es sich bei der Sensorschicht im weitesten Sinn um eine zumindest abschnittsweise flächige Schicht handelt, die hinsichtlich Stromflüssen in Richtung ihrer (ggf. jeweiligen) Flächennormalen überwacht werden soll. Als flächige Sensorschicht soll hierbei beispielsweise auch eine aus einem oder mehreren (ggf. sehr schmalen) Streifen bestehende Sensorschicht verstanden werden, beispielsweise auch eine aus Streifen bestehende Schicht, bei der der Streifen eine Zylinderoberfläche mehrfach und auf verschiedenen Höhen umschlingt, so dass sich eine Vielzahl von (differentiellen) Flächennormalen ergibt. In der Regel wird die Ober- und die Unterseite der Schicht mit negativem Temperaturkoeffizienten jeweils mit einer ebenfalls flächigen Elektrode zum Abgreifen eines Messsignals ausgestattet sein. Eine solche Sensorschicht kann als Parallelschaltung einer Vielzahl von Widerständen oder Impedanzen (Kapazitäten) betrachtet werden, so dass bereits eine lokale Temperaturschwellenwertüberschreitung zu einem sicher detektierbaren Sinken des Gesamtwiderstandes (beziehungsweise der Gesamtimpedanz) führt. Temperaturschwellenwertüberschreitungen, die größere Flächenabschnitte oder sogar die gesamte Fläche betreffen, lassen sich so natürlich ebenfalls sicher feststellen. Ebenso kann beispielsweise auch ein lokaler Durchschlag oder eine lokale Lichtbogenbildung zwischen den Elektroden festgestellt oder im Idealfall vorhergesehen und damit vermieden werden. Beispielsweise in Fällen, in denen es ausschließlich um die Detektion von Durchschlägen geht, kommen auch Ausführungsformen in Betracht, bei denen die Sensorschicht durch eine flächige Isolatorschicht mit auf der Ober- und der Unterseite davon vorgesehenen Kontaktschichten gebildet ist. Insofern ist der Begriff negativer Temperaturkoeffizient hier im weitesten Sinne zu verstehen. Um eine Sensorschicht mit negativem Temperaturkoeffizient im klassischeren Sinne auszubilden, können beispielsweise Materialien wir Siliziumdioxid, Siliziumcarbid, Aluminiumoxid, Titanoxid und andere Keramiken verwendet werden. Beispielsweise im Falle einer Glaskeramik kann vorgesehen sein, dass diese ein oder mehrere Alkalimetalle enthält, beispielsweise in einem Anteil bis zu zehn Gewichtsprozent. Es kann auch vorgesehen sein, dass die Glaskeramik mit Zirkonoxid, Zirkonsilikat, Quarz, Titanoxid und/oder Zinkoxid dotiert ist oder wird. Der Anteil der Dotierung kann dabei beispielsweise bis zu drei Gewichtsprozent betragen.

Es kann vorteilhaft sein, wenn die Temperaturüberwachungseinrichtung solange einen Normalbetrieb meldet, wie ein erster Temperaturschwellenwert nicht überschritten wird, der von der Temperatur eines zu erwärmenden Mediums abhängt. Im Falle einer Wasser- oder Flüssigkeitsheizung kann beispielsweise vorgesehen sein, dass bei einer Mediumstemperatur von beispielsweise - 40 °C ein Normalbetrieb angenommen wird, solange im Bereich der Fahrzeugheizung beispielsweise Temperaturen im Bereich von - 40 °C bis 100 °C gemessen werden, insbesondere durch das oben erwähnte Sensorelement. Liegt die Mediumstemperatur beispielsweise bei 75 °C, so kann beispielsweise solange ein Normalbetrieb angenommen werden, wie Temperaturen im Bereich von - 40 °C bis 150 °C gemessen werden.

Zumindest bei einigen Ausführungsformen der erfindungsgemäßen Fahrzeugheizung kann vorgesehen sein, dass die Temperaturüberwachungseinrichtung einen mit Software programmierbaren oder betreibbaren Controller und unabhängig von der Software arbeitende Schaltungskomponenten umfasst, die dazu ausgelegt sind, im Falle des Auftretens von zumindest einer der genannten Funktionsstörungen eine Notmaßnahme softwareunabhängig durchzuführen. Als Notmaßnahme kommt insbesondere eine Reduzierung der Heizleistung in Betracht, gegebenenfalls auf Null. Weiterhin können die Schaltungskomponenten dazu ausgelegt sein, dem Controller im Falle der Durchführung einer Notmaßnahme ein geeignetes Signal zu liefern, auf dessen Grundlage der Controller erkennt, dass die Schaltungskomponenten eine Funktionsstörung detektiert haben. Vorzugsweise wird dem Controller mit diesem Signal auch mitgeteilt, welche Art von Funktionsstörung (reversibel oder irreversibel) aufgetreten ist. Eine derartige Lösung kann aus Sicherheitsgründen in Erwägung gezogen werden, weil dadurch zumindest eine der Sicherheitsoptionen (zum Beispiel irreversibler Fehler, mittels flächigem Sensor detektiert) nicht oder nicht vollständig über eine Software, sondern ganz oder teilweise durch softwareunabhängige Hardware realisiert wird. Dadurch kann eine beispielsweise durch einen Softwarefehler hervorgerufene Fehlfunktion vermieden werden, weil sich eine gewisse Softwareunabhängigkeit ergibt. Die Schaltungskomponenten können dabei dazu ausgelegt sein, einen oder mehrere der erfindungsgemäß zu unterscheidenden Zustände zu detektieren. Dabei kommen Lösungen in Betracht, bei denen die Schaltungskomponenten redundant zu auch softwaremäßig verwirklichten Funktionen vorgesehen sind, oder auch Lösungen, bei denen durch die Schaltungskomponenten verwirklichte Funktionen softwaremäßig nicht zusätzlich verwirklicht werden. Wenn beispielsweise alle erfindungsgemäß zu unterscheidenden Zustände softwareunabhängig durch entsprechende Schaltungskomponenten detektiert werden können, ist es denkbar, dass alleine die erfindungsgemäß bevorzugte Merkfunktion, also das Verhindern eines erneuten Einschaltens aufgrund des Vorliegens eines bestimmten Signals, mit Hilfe des Controllers und entsprechender Software implementiert werden. Es ist aber auch denkbar, zu diesem Zweck softwareunabhängige aber merkfähige elektronische Bauteile einzusetzen, wobei unter merkfähig hierbei verstanden werden soll, dass auch eine Unterbrechung der Stromversorgung nicht dazu führt, dass eine auftretende Funktionsstörung später vergessen wird. Die Schaltungskomponenten können dabei Funktionen, wie vergleichen der Sensorwerte mit einem oder mehreren hardwaremäßig hinterlegten Werten und Abschalten (Notmaßnahme) bei Überschreiten des Wertes unter Einbeziehung beispielsweise eines Operationsverstärkers durchführen. Das Vorsehen derartiger Schaltungskomponenten kann nicht nur wegen schwer völlig auszuschließender Softwarefehler sinnvoll sein, sondern beispielsweise auch, wenn der softwaregestützte Controller noch für weitere Aufgaben verantwortlich ist, sodass er nicht immer oder nicht immer schnell genug zur Verfügung steht.

Vorgeschlagen wird außerdem ein Verfahren zur Überwachung einer Fahrzeugheizung, bei dem die folgenden Zustände unterschieden und gemeldet werden: Normalbetrieb, reversible Funktionsstörung und irreversible Funktionsstörung. Dadurch ergeben sich die vorstehend im Zusammenhang mit der Fahrzeugheizung erläuterten Vorteile und Eigenschaften in analoger oder ähnlicher Weise, weshalb an dieser Stelle zur Vermeidung von Wiederholungen auf die entsprechenden Ausführungen im Zusammenhang mit der Fahrzeugheizung verwiesen wird.

Auch im Rahmen des Verfahrens kann vorgesehen sein, dass der Zustand einer reversiblen Funktionsstörung mit Hilfe eines lokale Temperaturen erfassenden Sensorelements festgestellt wird, wie dies oben bereits im Zusammenhang mit der Fahrzeugheizung erläutert wurde.

Gleiches gilt für die Feststellung des Zustands einer irreversiblen Funktionsstörung mit Hilfe einer der Heizleiterschicht zumindest abschnittsweise zugeordneten Sensorschicht.

Aus dem Vorstehenden ergibt sich, dass ein Grundgedanke der Erfindung darin besteht, ein nur lokal aber dafür genau messendes Sensorelement, beispielsweise einen PTC-oder NTC-Sensor, zur Feststellung eines Normalzustandes sowie zur Detektion von reversiblen Funktionsstörungen zu verwenden, die mit relativ geringen Abweichungen von Normaltemperaturen einhergehen. Gleichzeitig wird der Heizleiterschicht eine flächige Sensorschicht zugeordnet, die nicht unbedingt sehr genaue Messwerte liefern, aber dafür in der Lage sein muss, starke Überhitzungen, die an irgendeiner Stelle der Heizleiterschicht auftreten (beispielsweise verursacht durch Glimmpunkte oder Lichtbögen) schnell und sicher zu detektieren, auch wenn diese Überhitzungen von dem genaueren Sensorelement an seinem Montageort eventuell (noch) nicht erkannt werden können.

Die Erfindung wird nun unter Bezugnahme auf die beigefügten Zeichnungen anhand besonders bevorzugter Ausführungsformen beispielhaft erläutert.

Es zeigen:
- Figur 1: eine schematische, teilweise perspektivische Darstellung einer ersten Ausführungsform einer Fahrzeugheizung, die gleichzeitig das Überwachungsverfahren veranschaulicht;
- Figur 2: eine schematische, teilweise perspektivische Darstellung einer zweiten Ausführungsform einer Fahrzeugheizung, die gleichzeitig das Überwachungsverfahren veranschaulicht;
- Figur 3: eine schematische, teilweise geschnittene Darstellung einer dritten Ausführungsform einer Fahrzeugheizung, die gleichzeitig das Überwachungsverfahren veranschaulicht;
- Figur 4: eine schematische, teilweise geschnittene Darstellung einer vierten Ausführungsform einer Fahrzeugheizung, die gleichzeitig das Überwachungsverfahren veranschaulicht; und
- Figur 5: eine schematische, teilweise perspektivische Darstellung einer fünften Ausführungsform einer Fahrzeugheizung, die gleichzeitig das Überwachungsverfahren veranschaulicht.

In den Figuren bezeichnen gleiche Bezugszeichen gleiche oder ähnliche Komponenten, die zur Vermeidung von Wiederholungen zumindest teilweise nicht mehrfach erläutert werden.

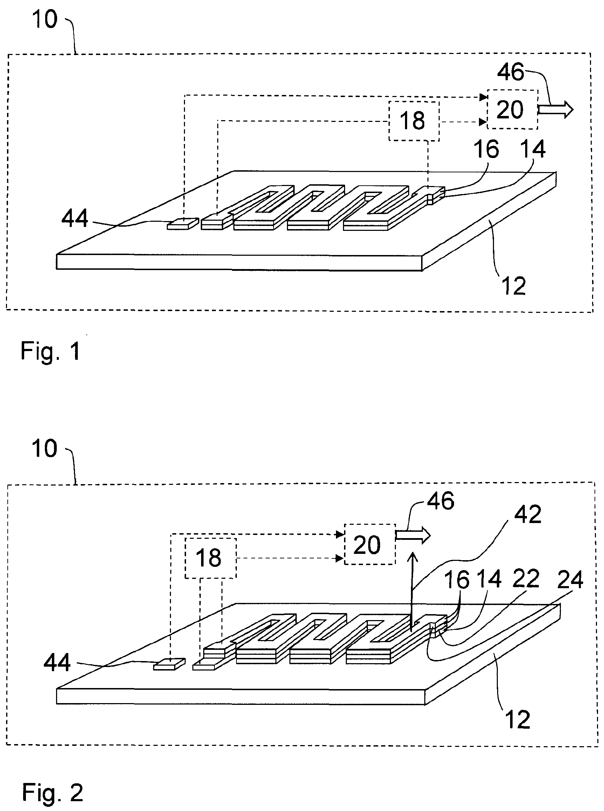

Figur 1 zeigt eine schematische, teilweise perspektivische Darstellung einer ersten Ausführungsform einer Fahrzeugheizung 10, und sie veranschaulicht gleichzeitig das Überwachungsverfahren.

Bei der in Figur 1 dargestellten Fahrzeugheizung 10 sowie auch bei allen anderen im Folgenden beschriebenen Fahrzeugheizungen kann es sich sowohl um Luftheizungen als auch um sogenannte Wasserheizungen handeln, beispielsweise - und ohne darauf beschränkt zu sein - für Elektro- oder Hybridautos. Luftheizungen unterscheiden sich von den sogenannten Wasserheizungen dadurch, dass bei Luftheizungen der zu erwärmende Luftstrom direkt über einen Wärmetauscher des Luftheizgerätes geführt wird, während bei den sogenannten Wasserheizungen zunächst eine Flüssigkeit, in der Regel ein Gemisch aus Wasser - daher der Name - und einem Frostschutzmittel, beispielsweise Glykol, über einen Wärmetauscher des Wasserheizgerätes geführt wird, um die Wärme mit Hilfe der Flüssigkeit und eines weiteren Wärmetauschers an den gewünschten Ort zu bringen.

Die in Figur 1 insgesamt nur als Block schematisch dargestellte Fahrzeugheizung 10 weist einen Grundkörper 12 auf, bei dem es sich in diesem Fall um einen Wärmetauscher handelt. Je nach Art der Fahrzeugheizung ist dieser Wärmetauscher 12 dazu vorgesehen, Luft oder eine Flüssigkeit zu erwärmen, wozu der Wärmetauscher 12 an seiner Unterseite nicht dargestellte Rippen oder ähnliche Einrichtungen zur Vergrößerung der für den Wärmetausch wirksamen Oberfläche aufweisen kann.

Bei der Herstellung der in Figur 1 dargestellten Fahrzeugheizung 10 wurde die Oberfläche des Wärmetauschers 12 mit einer nicht-eigensicheren Heizleiterschicht 14 ausgestattet, und zwar mit Hilfe eines thermischen Spritzverfahrens. Das direkte Aufbringen der Heizleiterschicht 14 auf den Wärmetauscher 12, also der Verzicht auf eine dazwischenliegende Isolierschicht, ist in der Regel nur dann sinnvoll, wenn der Wärmetauscher 12 aus einem Material hergestellt ist, das eine deutlich geringere elektrische Leitfähigkeit als die Heizleiterschicht 14 aufweist. Im Betrieb ist die Heizleiterschicht 14 mit einer nicht dargestellten Spannungsquelle verbunden, bei der es sich beispielsweise um eine gegebenenfalls durch Pulsweitenmodulation auf 250 Volt heruntergetaktete Gleichspannungsquelle handeln kann. Zu diesem Zweck ist die Heizleiterschicht an ihren Endabschnitten (bezogen auf ihre längliche Ausdehnungsrichtung) geeignet zu kontaktieren, was im Ermessen des Fachmanns liegt und ebenfalls nicht dargestellt ist.

Benachbart zur Heizleiterschicht 14 ist auf der Oberfläche des Wärmetauschers 12 ein Sensorelement 44 vorgesehen, das beispielsweise durch einen PTC- oder NTC-Sensor gebildet sein kann. Das Sensorelement 44 ist dazu in der Lage die Temperatur an seinem Montageort vergleichsweise genau zu messen, und die gemessene Temperatur einem Controller 20 mitzuteilen.

Auf die Heizleiterschicht 14 wurde mit Hilfe eines thermischen Spritzverfahrens eine Sensorschicht 16 aufgespritzt, die im Falle der Ausführungsform von Figur 1 einen positiven Temperaturkoeffizienten aufweist, so dass sich für die Sensorschicht 16 zumindest tendenziell eine PTC-Charakteristik ergibt.

In der Praxis wird die Verwendung eines thermischen Spritzverfahrens möglicherweise dazu führen, dass sich anstelle des schematisch dargestellten exakt sandwichartigen Schichtaufbaus eine Konfiguration ergibt, bei der sich das Material der Sensorschicht 16 zumindest abschnittsweise auch über die Randbereiche der Heizleiterschicht 14 erstreckt oder bei der die Heizleiterschicht 14 sogar mehr oder weniger vollständig unter der Sensorschicht 16 begraben ist.

Wenn die Sensorschicht 16 ohne Verwendung einer Isolierschicht direkt auf der Heizleiterschicht 14 angeordnet ist, wie dies in Figur 1 dargestellt ist, muss die elektrische Leitfähigkeit der Sensorschicht 16 für normale Betriebstemperaturen (deutlich) geringer gewählt werden als die elektrische Leitfähigkeit der Heizleiterschicht 14, um einen ordnungsgemäßen Betrieb der Fahrzeugheizung 10 zu gewährleisten.

Im Betrieb der Fahrzeugheizung 10 überwacht die Messeinrichtung 18 den temperaturabhängigen Widerstand der Sensorschicht 16, beispielsweise indem sie - wie durch die gestrichelten Linien angedeutet - an die Endabschnitte der Sensorschicht 16 eine vorzugsweise konstante Spannung anlegt und den sich ergebenden Stromfluss erfasst, beispielsweise über einen Shuntwiderstand, der Bestandteil der Messeinrichtung 18 sein kann. Tritt nun im Bereich der Heizleiterschicht 14 beispielsweise aufgrund eines Glimmpunktes oder einer Lichtbogenzündung eine lokale aber sehr starke Überhitzung auf beispielsweise 1000 °C auf, so führt dies bei geeigneter Konditionierung der Sensorschicht 16 dazu, dass sich ihr Gesamtwiderstand aufgrund ihres bei positivem Temperaturkoeffizienten dominierenden Reihenschaltungscharakters so erhöht, dass dies von der Messeinrichtung 18 sicher erkannt werden kann.

Das Sensorelement 44, die Sensorschicht 16, die Messeinrichtung 18 und ein Controller 20 bilden zusammen eine Temperaturüberwachungseinrichtung, die dazu in der Lage ist, die drei folgenden Zustände zu unterscheiden und als Signal 46 zu melden: Normalbetrieb, reversible Funktionsstörung und irreversible Funktionsstörung. Meldet das Sensorelement 44 beispielsweise eine Normaltemperatur im Bereich bis beispielsweise 150 °C, so geht der Controller von einem Normalbetrieb aus und meldet ein entsprechendes Signal 46. Meldet das Sensorelement 44 beispielsweise einen unerlaubten Temperaturanstieg auf 180 °C, so geht der Controller von einer reversiblen Funktionsstörung aus und meldet ein dementsprechendes Signal 46. Eine derartige reversible Funktionsstörung könnte im Falle einer Wasser- beziehungsweise Flüssigkeitsheizung beispielsweise durch fehlende oder stehende Flüssigkeit verursacht werden. Der Controller 20 schaltet in einem solchen Fall die Heizleiterschicht 14 vorübergehend ab oder reduziert zumindest die Heizleistung. Sobald das Sensorelement 44 wieder eine Normaltemperatur meldet, kann die Heizleistung in der Regel wieder erhöht werden. Vorzugsweise unabhängig davon, was das Sensorelement 44 gerade meldet, geht der Controller 20 von einer irreversiblen Funktionsstörung aus, wenn die Messeinrichtung 18 auch nur einmal eine durch die Sensorschicht 16 detektierte sehr starke Überhitzung im Bereich der Heizleiterschicht 14 gemeldet hat. Somit hat das Signal der Messeinrichtung 18 vorzugsweise Priorität vor dem Signal des Sensorelements 44, weil eine starke lokale Überhitzung in irgendeinem Bereich der Heizleiterschicht 14 sich möglicherweise am Montageort des Sensorelements 44 noch gar nicht auswirkt. Eine derart starke Überhitzung im Bereich der Heizleiterschicht 14 lässt jedoch beispielsweise auf das Auftreten eines Glimmpunktes oder sogar eines Lichtbogens schließen. In so einem Fall sind nachhaltige Schäden zu befürchten, weswegen das Heizgerät aus Sicherheitsgründen nicht wieder in Betrieb genommen werden sollte, sondern zunächst repariert oder ausgetauscht werden muss. Folglich erzeugt der Controller 20 in einem solchen Fall irgendein geeignetes Signal 46, das eine irreversible Funktionsstörung anzeigt, wobei eine neue Inbetriebnahme verhindert wird. Der Controller 20 muss nicht ausschließlich der Überwachungseinrichtung zugeordnet sein. Beispielsweise ist es denkbar, dass der Controller 20 den Betrieb der gesamten Fahrzeugheizung steuert beziehungsweise regelt, oder dass die für die Überwachungseinrichtung wesentlichen Funktionen von einem Controller 20 wahrgenommen werden, der ohnehin im Fahrzeug vorhanden ist.

Figur 2 zeigt eine schematische, teilweise perspektivische Darstellung einer zweiten Ausführungsform einer Fahrzeugheizung 10, und sie veranschaulicht gleichzeitig das Überwachungsverfahren.

Auch bei dieser Ausführungsform ist die Heizleiterschicht 14 direkt auf den durch einen Wärmetaucher 12 gebildeten Grundkörper der Fahrzeugheizung 10 aufgespritzt. Die Fahrzeugheizung gemäß Figur 2 unterscheidet sich jedoch dadurch von der Fahrzeugheizung gemäß Figur 1, dass die Sensorschicht 16 bei dieser Ausführungsform drei Bestandteile umfasst. Nämlich die Heizleiterschicht 14, die in diesem Fall neben ihrer eigentlichen Funktion als Heizleiter gleichzeitig einen Bestandteil der Sensorschicht 16 bildet. Eine durch thermisches Spritzen auf die Heizleiterschicht 14 aufgespritzte Schicht 22 mit einem negativen Temperaturkoeffizienten und eine auf die Schicht 22 aufgebrachte elektrisch leitende Kontaktschicht 24. Tritt aufgrund einer irreversiblen Funktionsstörung irgendwo im Bereich der Heizleiterschicht 14 eine sehr starke Erwärmung auf beispielsweise 1000 °C auf, so führt dies bei geeigneter Konditionierung der Schicht 22 mit negativem Temperaturkoeffizienten dazu, dass sich ihr Gesamtwiderstand oder ihre Gesamtimpedanz aufgrund ihres bei negativen Temperaturkoeffizienten dominierenden Parallelschaltungscharakters deutlich verringert. Dies kann von der Messeinrichtung 18 sicher erkannt werden. Zu diesem Zweck ist die Messeinrichtung 18 in diesem Fall, wie durch die gestrichelten Linien angedeutet, zwischen die zusätzlich als untere Kontaktschicht dienende Heizleiterschicht 14 und die über der Schicht 22 mit negativem Temperaturkoeffizienten vorgesehene Kontaktschicht 24 geschaltet. Die Messeinrichtung 18 kann so, in ähnlicher Weise wie dies im Zusammenhang mit der Ausführungsform gemäß Figur 1 erläutert wurde, eine irreversible Funktionsstörung sicher detektieren und dem Controller 20 ein entsprechendes Signal liefern.

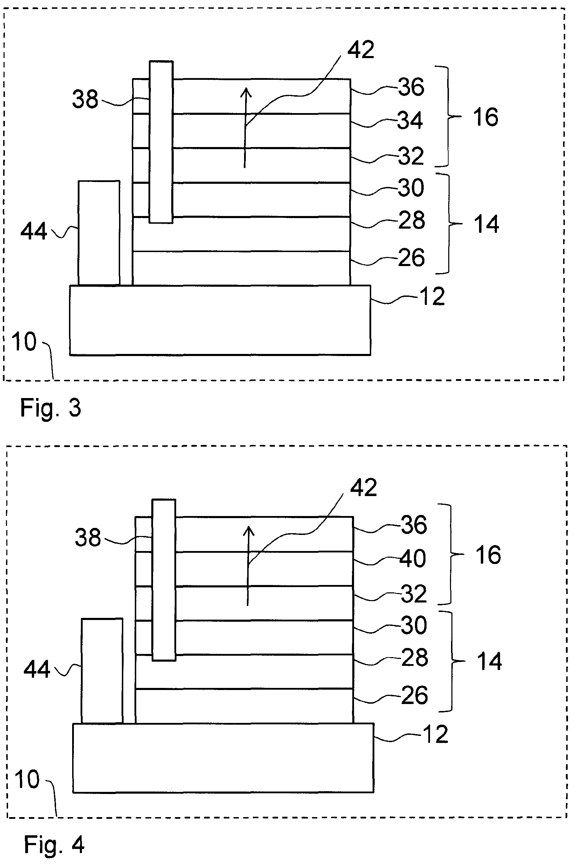

Figur 3 zeigt eine schematische, teilweise geschnittene Darstellung einer dritten Ausführungsform einer Fahrzeugheizung, die gleichzeitig das Überwachungsverfahren veranschaulicht.

Die Ausführungsform gemäß Figur 3 unterscheidet sich dadurch von der Ausführungsform gemäß Figur 2, dass der Wärmetauscher 10 in diesem Fall aus einem elektrisch leitfähigen Material besteht, insbesondere aus Aluminium. Daher unterteilt sich die Heizleiterschicht 14 bei dieser Ausführungsform in eine erste Isolationsschicht 26, die eigentliche Heizschicht 28 und eine zweite Isolationsschicht 30. Vorzugsweise werden alle drei Bestandteile der Heizleiterschicht durch ein thermisches Spritzverfahren aufgespritzt. Bezogen auf die Darstellung oberhalb von der insgesamt mit 14 bezeichneten Heizleiterschicht, ist eine insgesamt mit 16 bezeichnete Sensorschicht vorgesehen, die ebenfalls durch ein thermisches Spritzverfahren aufgespritzt wurde und die bei dieser Ausführungsform ihrerseits drei Bestandteile aufweist. Direkt über der zweiten Isolationsschicht 30 befindet sich eine erste elektrisch leitfähige Kontaktschicht 32, auf die eine Schicht 34 aus einem Material mit negativem Temperaturkoeffizienten aufgespritzt wurde. Die Schicht 34 kann - ohne darauf beschränkt zu sein - insbesondere aus einem der Materialen bestehen, die im allgemeinen Teil der Beschreibung für Schichten mit negativem Temperaturkoeffizienten vorgeschlagen wurden. Direkt auf die Schicht 34 mit negativem Temperaturkoeffizienten wurde eine zweite, obere elektrisch leitfähige Kontaktschicht 36 aufgespritzt. Beispielsweise ein Glimmpunkt führt zu einer so starken lokalen Erwärmung, dass diese durch einen Abgriff des Messsignals zwischen der oberen Kontaktschicht 36 und der unteren Kontaktschicht 32 detektiert werden kann, über eine Messeinrichtung 18, wie sie in Figur 2 dargestellt ist. In Figur 3 ist außerdem ein elektrisch leitfähiger Gaskanal 38 eingezeichnet, wie er im Falle einer Lichtbogenzündung ausgehend von der eigentlichen Heizschicht 28 entsteht. Der Gaskanal 38 durchdringt beziehungsweise durchschlägt die übrigen Schichten auf der vom Grundkörper abgewandten Seite der Heizleiterschicht 14 und führt zu einem Stromfluss durch die Schicht 34 mit negativem Temperaturkoeffizienten, und zwar in Richtung ihrer Flächennormalen 42. Auch dieser Stromfluss kann durch eine zwischen die untere Kontaktschicht 32 und die obere Kontaktschicht 36 geschaltete Messeinrichtung detektiert werden.

Figur 4 zeigt eine schematische, teilweise geschnittene Darstellung einer vierten Ausführungsform einer Fahrzeugheizung, die gleichzeitig das Überwachungsverfahren veranschaulicht.

Die in Figur 4 dargestellte Ausführungsform unterscheidet sich dadurch von der Ausführungsform gemäß Figur 3, dass die Sensorschicht 16 anstelle der in Figur 3 gezeigten Schicht 34 mit negativem Temperaturkoeffizienten eine Isolationsschicht 40 umfasst. Auch mit einer derartig vereinfachten Anordnung ist es möglich, mit Hilfe einer zwischen die untere Kontaktschicht 32 und die obere Kontaktschicht 36 geschalteten Messeinrichtung (in Figur 4 nicht dargestellt) einen durch eine Lichtbogenzündung verursachten Gaskanal 38 sicher zu detektieren, weil in einem solchen Fall die Isolationsschicht 40 von dem Gaskanal 38 durchdrungen wird. Insbesondere wenn es sich bei dem Grundkörper 12 um einen elektrisch nicht leitfähigen Grundkörper handelt, kann die Isolationsschicht 26 gegebenenfalls entfallen. Außerdem kann gegebenenfalls auch auf die untere Kontaktschicht 32 und die obere Isolationsschicht 30 verzichtet werden, wobei das Messsignal in diesem Fall zwischen der eigentlichen Heizschicht 28 und der oberen Kontaktschicht 36 abgegriffen wird.

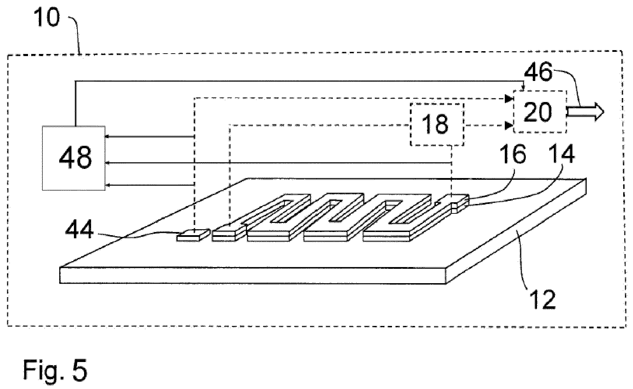

Figur 5 zeigt eine schematische, teilweise perspektivische Darstellung einer fünften Ausführungsform einer Fahrzeugheizung, die gleichzeitig das Überwachungsverfahren veranschaulicht.

Die in Figur 5 dargestellte Ausführungsform entspricht in weiten Teilen der Ausführungsform gemäß Figur 1, weshalb die dort bereits erläuterten Komponenten hier nicht erneut beschrieben werden. Gemäß der Ausführungsform von Figur 5 ist vorgesehen, dass die Temperaturüberwachungseinrichtung 16, 18, 20, 44, 48 einen mit Software programmierbaren oder betreibbaren Controller 20 und unabhängig von der Software arbeitende Schaltungskomponenten 48 umfasst. Diese Schaltungskomponenten 48 sind dazu ausgelegt, im Falle des Auftretens von zumindest einer der erfindungsgemäß zu unterscheidenden Funktionsstörungen eine Notmaßnahme softwareunabhängig durchzuführen. Bei einer derartigen Notmaßnahme kann es sich insbesondere um die Reduzierung der Heizleistung handeln, beispielsweise kann die Stromzufuhr zur Heizleiterschicht 14 durch das Öffnen eines zu den Schaltungskomponenten zählenden (nicht dargestellten) Transistors oder anderen Halbleiterschalters ganz oder teilweise unterbunden werden. Die Schaltungskomponenten 48 können beispielsweise einen oder mehrere zu Vergleichszwecken dienende Operationsverstärker umfassen, die von den Sensoren gelieferte Messwerte oder abgegriffene Spannungen mit von Referenzspannungsquellen gelieferten Werten oder Spannungen vergleichen, um so zumindest einen der erfindungsgemäß zu unterscheidenden Zustände detektieren zu können. Dies ist in Figur 5 durch die entsprechenden Eingangssignale der nur schematisch dargestellten Schaltungskomponenten 48 angedeutet. Bei dieser Ausführungsform sind die Schaltungskomponenten 48 weiterhin dazu in der Lage, dem Controller 20 im Falle des Auftretens einer Funktionsstörung ein Signal (zum Beispiel einen bestimmten Spannungswert) zu liefern, so dass der Controller 20 die erfindungsgemäß bevorzugte Merkfunktion erfüllen kann. Somit kann auch dann, wenn eine aufgetretene irreversible Funktionsstörung nicht über den Controller 20, sondern über die Schaltungskomponenten 48 detektiert wurde, der zuletzt gemeldete oder aufgetretene Zustand vor einer erneuten Inbetriebnahme, also einem neuen Betriebszyklus der Fahrzeugheizung, abgefragt werden. Im Falle einer irreversiblen Funktionsstörung wird dann eine erneute Inbetriebnahme verhindert, so dass die Fahrzeugheizung in einem solchen Fall dauerhaft abgeschaltet bleibt, solange kein Austausch oder keine Reparatur erfolgt ist. Die Fähigkeit zur Übermittlung eines entsprechenden Signals von den Schaltungskomponenten 48 an den Controller 20 ist in Figur 5 durch eine entsprechende Signalleitung angedeutet. Die Schaltungskomponenten 48 können Funktionen, die der Controller 20 oder auch die Messeinrichtung 18 bei der Ausführungsform gemäß Figur 1 übernehmen, entweder redundant oder ausschließlich zur Verfügung stellen. Jedenfalls ergibt sich durch die Schaltungskomponenten 48 eine gewisse Softwareunabhängigkeit, was insbesondere für (stark) sicherheitsrelevante Funktionen wünschenswert sein kann.

Wie erwähnt, werden die jeweiligen Sensorschichten 16 (und vorzugsweise auch die übrigen hier erläuterten Schichten) in bevorzugter Weise durch ein thermisches Spritzverfahren auf den Grundkörper 12 aufgebracht. Es sind aber im Rahmen der Erfindung auch Lösungen denkbar, bei denen die jeweilige Sensorschicht 16 als separates Bauteil hergestellt und dann auf der Heizleiterschicht 14 befestigt wird, beispielsweise durch Klemmen, Kleben oder thermisches Anbinden mit Wärmeleitfolie. Wenn der Sensor beziehungsweise die Sensorschicht 16 als separates Bauteil hergestellt werden, ist es natürlich auch im Falle von wärmeempfindlichen Grundkörpern möglich, zur Herstellung der Sensorschicht 16 übliche Einbrennverfahren beziehungsweise hochschmelzende und/oder nicht spritzbare Materialien zu verwenden.

Bei den vorstehend erwähnten Isolationsschichten 26, 30 und 40 kann es sich beispielsweise um Aluminiumoxidschichten handeln, während die Heizleiterschicht 14 beziehungsweise die eigentliche Heizschicht 28 beispielsweise durch eine Nickelchromschicht verwirklicht werden kann. Als Kontaktschichten 32, 36 können beispielsweise Kupferschichten dienen und als Schicht 34 mit negativem Temperaturkoeffizienten kommt neben den im allgemeinen Teil der Beschreibung bereits genannten Materialien beispielsweise auch eine Schicht aus mit Chromoxid dotiertem Titanoxid in Betracht.

### Bezugszeichenliste

- 10: Fahrzeugheizung
- 12: Grundkörper/Wärmetauscher
- 14: Heizleiterschicht
- 16: Sensorschicht
- 18: Messeinrichtung
- 20: Controller
- 22: Schicht mit negativem Temperaturkoeffizienten
- 24: Kontaktschicht
- 26: Erste Isolationsschicht
- 28: Eigentliche Heizschicht
- 30: Zweite Isolationsschicht
- 32: Erste Kontaktschicht
- 34: Material mit negativem Temperaturkoeffizienten
- 36: Zweite Kontaktschicht
- 38: Durch eventuellen Lichtbogen verursachter Gaskanal
- 40: Isolationsschicht
- 42: Flächennormale der Sensorschicht
- 44: Lokale Temperaturen erfassendes Sensorelement
- 46: Signal, das den Zustand anzeigt
- 48: Schaltungskomponenten

## Patentansprüche

1. Fahrzeugheizung (10) mit einem Grundkörper (12), der eine nicht-eigensichere Heizleiterschicht (14) trägt, und mit einer der Heizleiterschicht (14) zugeordneten Temperaturüberwachungseinrichtung (16, 18, 20, 44), **dadurch gekennzeichnet, dass** die Temperaturüberwachungseinrichtung (16, 18, 20, 44) zumindest die drei folgenden Zustände unterscheiden und als Signal (46) melden kann:
- Normalbetrieb,
- reversible Funktionsstörung und
- irreversible Funktionsstörung,
damit der zuletzt gemeldete Zustand vor einer erneuten Inbetriebnahme der Fahrzeugheizung abgefragt und im Falle einer irreversiblen Funktionsstörung eine erneute Inbetriebnahme verhindert werden kann.

2. Fahrzeugheizung nach Anspruch 1, **dadurch gekennzeichnet, dass** die Temperaturüberwachungseinrichtung (16, 18, 20, 44) zur Detektion von reversiblen Funktionsstörungen ein lokale Temperaturen erfassendes Sensorelement (44) umfasst.

3. Fahrzeugheizung nach Anspruch 1 oder 2, **dadurch gekennzeichnet, dass** die Temperaturüberwachungseinrichtung (16, 18, 20, 44) zur Detektion von irreversiblen Funktionsstörungen eine der Heizleiterschicht (14) zumindest abschnittsweise zugeordnete Sensorschicht (16) umfasst.

4. Fahrzeugheizung (10) nach Anspruch 3, **dadurch gekennzeichnet, dass** die Sensorschicht (16) mit Hilfe eines thermischen Spritzverfahrens ausgebildet wurde.

5. Fahrzeugheizung (10) nach Anspruch 3 oder 4, **dadurch gekennzeichnet, dass** die Sensorschicht (16) zumindest bereichsweise eine Widerstands- beziehungsweise Impedanzcharakteristik mit einem positiven Temperaturkoeffizienten aufweist.

6. Fahrzeugheizung (10) nach Anspruch 3 oder 4, **dadurch gekennzeichnet, dass** die Sensorschicht (16) zumindest bereichsweise eine Widerstands- beziehungsweise Impedanzcharakteristik mit einem negativen Temperaturkoeffizienten aufweist.

7. Fahrzeugheizung (10) nach einem der vorhergehenden Ansprüche, **dadurch gekennzeichnet, dass** die Temperaturüberwachungseinrichtung (16, 18, 20, 44) solange einen Normalbetrieb meldet, wie ein erster Temperaturschwellenwert nicht überschritten wird, der von der Temperatur eines zu erwärmenden Mediums abhängt.

8. Fahrzeugheizung (10) nach einem der vorhergehenden Ansprüche, **dadurch gekennzeichnet, dass** die Temperaturüberwachungseinrichtung (16, 18, 20, 44, 48) einen mit Software programmierbaren oder betreibbaren Controller (20) und unabhängig von der Software arbeitende Schaltungskomponenten (48) umfasst, die dazu ausgelegt sind, im Falle des Auftretens von zumindest einer der genannten Funktionsstörungen eine Notmaßnahme softwareunabhängig durchzuführen.

9. Verfahren zur Überwachung einer Fahrzeugheizung (10) mit den Merkmalen eines der vorhergehenden Ansprüche, **dadurch gekennzeichnet, dass** durch die Temperaturüberwachungseinrichtung (16, 18, 20, 44) die folgenden Zustände unterschieden und gemeldet werden:
- Normalbetrieb,
- reversible Funktionsstörung und
- irreversible Funktionsstörung,
damit der zuletzt gemeldete Zustand vor einer erneuten Inbetriebnahme der Fahrzeugheizung abgefragt und im Falle einer irreversiblen Funktionsstörung eine erneute Inbetriebnahme verhindert werden kann.

10. Verfahren nach Anspruch 9, **dadurch gekennzeichnet, dass** der Zustand reversible Funktionsstörung mit Hilfe eines lokale Temperaturen erfassenden Sensorelements (44) festgestellt wird.

11. Verfahren nach Anspruch 9 oder 10, **dadurch gekennzeichnet, dass** der Zustand irreversible Funktionsstörung mit Hilfe einer der Heizleiterschicht (14) zumindest abschnittsweise zugeordneten Sensorschicht (16) festgestellt wird.

## Claims

1. Vehicle heater (10) having a main body (12) which is fitted with a heating conductor layer (14) which is not inherently safe, and having a temperature monitoring device (16, 18, 20, 44) which is associated with the heating conductor layer (14), **characterized in that** the temperature monitoring device (16, 18, 20, 44) can make a distinction between and can report, as signal (46), at least the three following states:
- normal operation,
- reversible functional fault and
- irreversible functional fault,
so that the state reported last can be checked before the vehicle heater is restarted and, in the case of an irreversible functional fault, restarting can be prevented.

2. Vehicle heater according to Claim 1, **characterized in that** the temperature monitoring device (16, 18, 20, 44) comprises a sensor element (44), which records local temperatures, in order to detect reversible functional faults.

3. Vehicle heater according to Claim 1 or 2, **characterized in that** the temperature monitoring device (16, 18, 20, 44) comprises a sensor layer (16), which is associated with the heating conductor layer (14) at least in sections, in order to detect irreversible functional faults.

4. Vehicle heater (10) according to Claim 3, **characterized in that** the sensor layer (16) was formed with the aid of a thermal spraying method.

5. Vehicle heater (10) according to Claim 3 or 4, **characterized in that** the sensor layer (16) has a resistance or impedance characteristic with a positive temperature coefficient at least in regions.

6. Vehicle heater (10) according to Claim 3 or 4, **characterized in that** the sensor layer (16) has a resistance or impedance characteristic with a negative temperature coefficient at least in regions.

7. Vehicle heater (10) according to one of the preceding claims, **characterized in that** the temperature monitoring device (16, 18, 20, 44) reports normal operation as long as a first temperature threshold value which depends on the temperature of a medium which is to be heated is not exceeded.

8. Vehicle heater (10) according to one of the preceding claims, **characterized in that** the temperature monitoring device (16, 18, 20, 44, 48) comprises a controller (20) which can be programmed or can be operated using software and circuit components (48) which operate independently of the software and which are designed to carry out an emergency measure independently of software if at least one of the said functional faults occurs.

9. Method for monitoring a vehicle heater (10) having the features of one of the preceding claims, **characterized in that** the temperature monitoring device (16, 18, 20, 44) makes a distinction between and reports the following states:
- normal operation,
- reversible functional fault and
- irreversible functional fault,
so that the state reported last can be checked before the vehicle heater is restarted and restarting can be prevented in the event of an irreversible functional fault.

10. Method according to Claim 9, **characterized in that** the reversible functional fault state is determined with the aid of a sensor element (44) which records local temperatures.

11. Method according to Claim 9 or 10, **characterized in that** the irreversible functional fault state is determined with the aid of a sensor layer (16) which is associated with the heating conductor layer (14) at least in sections.

## Revendications

1. Chauffage de véhicule (10) avec un corps de base (12) qui porte une couche thermoconductrice (14) extrinsèque et avec dispositif de contrôle de la température (16, 18, 20, 44) attribué à la couche thermoconductrice (14) **caractérisé en ce que** le dispositif de contrôle de la température (16, 18, 20, 44) peut différencier au moins les trois états suivants et les annoncer sous forme de signal (46) :
- fonctionnement normal,
- anomalie de fonctionnement réversible et
- anomalie de fonctionnement irréversible,
afin que l'état annoncé en dernier puisse être consulté avant une nouvelle mise en service du chauffage du véhicule et qu'en cas d'une anomalie de fonctionnement irréversible une nouvelle mise en service puisse être évitée.

2. Chauffage de véhicule selon la revendication 1 **caractérisé en ce que** le dispositif de contrôle de la température (16, 18, 20, 44) comprend un élément de détection (44) saisissant des températures locales pour détecter des anomalies de fonctionnement réversibles.

3. Chauffage de véhicule selon la revendication 1 ou 2 **caractérisé en ce que** le dispositif de contrôle de la température (16, 18, 20, 44) comprend une couche de détection (16) attribuée au moins par section à la couche thermoconductrice (14) pour détecter des anomalies de fonctionnement irréversibles.

4. Chauffage de véhicule (10) selon la revendication 3 **caractérisé en ce que** la couche de détection (16) a été constituée à l'aide d'un procédé d'injection thermique.

5. Chauffage de véhicule (10) selon la revendication 3 ou 4 **caractérisé en ce que** la couche de détection (16) comporte au moins par zone une caractéristique d'impédance en rapport avec la résistance avec un coefficient de température positif.

6. Chauffage de véhicule (10) selon la revendication 3 ou 4 **caractérisé en ce que** la couche de détection (16) comporte au moins par zone une caractéristique d'impédance en rapport avec la résistance avec un coefficient de température négatif.

7. Chauffage de véhicule (10) selon l'une quelconque des revendications précédentes **caractérisé en ce que** le dispositif de contrôle de la température (16, 18, 20, 44) annonce un fonctionnement normal tant qu'une première valeur de seuil de tempéraure n'est pas dépassée qui est fonction de la température d'un milieu à réchauffer.

8. Chauffage de véhicule (10) selon l'une quelconque des revendications précédentes **caractérisé en ce que** le dispositif de contrôle de la température (16, 18, 20, 44, 48) comprend un contrôleur (20) programmable ou exploitable avec un logiciel et des composants de circuit (48) fonctionnant en fonction d'un logiciel, qui sont conçus de telle manière qu'en cas de survenance d'au moins une des anomalies de fonctionnement citées ils exécutent une mesure d'urgence en fonction du logiciel.

9. Procédé pour le contrôle d'un chauffage de véhicule (10) avec les caractéristiques d'une quelconque des revendications précédentes **caractérisé en ce que** les états suivants sont différenciés et annoncés par le dispositif de contrôle de la température (16, 18, 20, 44) :
- fonctionnement normal,
- anomalie de fonctionnement réversible et
- anomalie de fonctionnement irréversible,
afin que l'état annoncé en dernier puisse être consulté avant une nouvelle mise en service du chauffage du véhicule et qu'en cas d'une anomalie de fonctionnement irréversible une nouvelle mise en service puisse être évitée.

10. Procédé selon la revendication 9 **caractérisé en ce que** l'état d'anomalie de fonctionnement réversible est constaté à l'aide d'un élément de détection (44) saisissant les températures locales.

11. Procédé selon la revendication 9 ou 10 **caractérisé en ce que** l'état d'anomalie de fonctionnement irréversible est constaté à l'aide d'une couche de détection (16) attribuée au moins par section à la couche thermoconductrice (14).
